(19) Europäisches Patentamt
European Patent Office
Office européen des brevets

(11) EP 3 171 598 A1

(12) EUROPEAN PATENT APPLICATION

(43) Date of publication:
24.05.2017 Bulletin 2017/21

(51) Int Cl.:
H04N 19/597 (2014.01)     H04N 19/147 (2014.01)
H04N 19/12 (2014.01)      H04N 19/179 (2014.01)

(21) Application number: 15306837.4

(22) Date of filing: 19.11.2015

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(71) Applicant: Thomson Licensing
92130 Issy-les-Moulineaux (FR)

(72) Inventors:
• THOREAU, Dominique
  35576 Cesson-Sévigné Cedex (FR)
• LOPEZ, Patrick
  35576 Cesson-Sévigné Cedex (FR)
• BOISSON, Guillaume
  35576 Cesson-Sévigné Cedex (FR)

(74) Representative: Huchet, Anne
TECHNICOLOR
1-5, rue Jeanne d'Arc
92130 Issy-les-Moulineaux (FR)

(54) **METHODS AND DEVICES FOR ENCODING AND DECODING A MATRIX OF VIEWS OBTAINED FROM LIGHT-FIELD DATA, CORRESPONDING COMPUTER PROGRAM AND NON-TRANSITORY PROGRAM STORAGE DEVICE**

(57)     A method for encoding a matrix of views obtained from light-field data is disclosed. According to the present disclosure, the method comprises for a group of views of said matrix of views:
- Obtaining (51) information representative of a type of encoding and encoding (52) said information, said type of encoding corresponding to an epipolar plane image encoding using at least one part of epipolar plane image, or said type of encoding corresponding to a view by view encoding according to a views' encoding order,

- encoding (53) said group of views in said data stream responsive to said information representative of a type of encoding, wherein, in the case where said type of encoding is an epipolar plane image encoding, encoding said group of views comprises :
- obtaining (534) at least one part of an epipolar plane image (EPI); and
- encoding (535) said at least one part of an epipolar plane image.

Fig. 5

EP 3 171 598 A1

**Description**

## 1. <u>Technical Field</u>

The present disclosure relates to light field imaging, and to technologies for acquiring and processing light field data. More precisely, the present disclosure generally relates to a method and an apparatus for encoding and decoding a light field based image, and finds applications in the domain of image or video encoding/decoding.

## 2. <u>Background Art</u>

This section is intended to introduce the reader to various aspects of art, which may be related to various aspects of the present disclosure that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Conventional image capture devices render a three-dimensional scene onto a two-dimensional sensor. During operation, a conventional capture device captures a two-dimensional (2-D) image representative of an amount of light that reaches a photosensor (or photodetector) within the device. However, this 2-D image contains no information about the directional distribution of the light rays that reach the photosensor (which may be referred to as the light field). Depth, for example, is lost during the acquisition. Thus, a conventional capture device does not store most of the information about the light distribution from the scene.

Light field capture devices (also referred to as "light field data acquisition devices") have been designed to measure a four-dimensional (4D) light field of the scene by capturing the light from different viewpoints of that scene. Thus, by measuring the amount of light traveling along each beam of light that intersects the photosensor, these devices can capture additional optical information (information about the directional distribution of the bundle of light rays) for providing new imaging applications by post-processing. The information acquired/obtained by a light field capture device is referred to as the light field data. Light field capture devices are defined herein as any devices that are capable of capturing light field data. There are several types of light field capture devices, among which:

- plenoptic devices, which use a microlens array placed between the image sensor and the main lens, as described in document US 2013/0222633;
- a camera array, where each camera images onto its own image sensor.

The light field data may also be simulated with Computer Generated Imagery (CGI), from a series of 2-D images (called views when two differing images representative of a same scene are captured with different viewing points) of a scene each taken from a different viewpoint by the use of a conventional handheld camera.

Light field data processing comprises notably, but is not limited to, generating refocused images of a scene, generating perspective views of a scene, generating depth maps of a scene, generating extended depth of field (EDOF) images, generating stereoscopic images, and/or any combination of these.

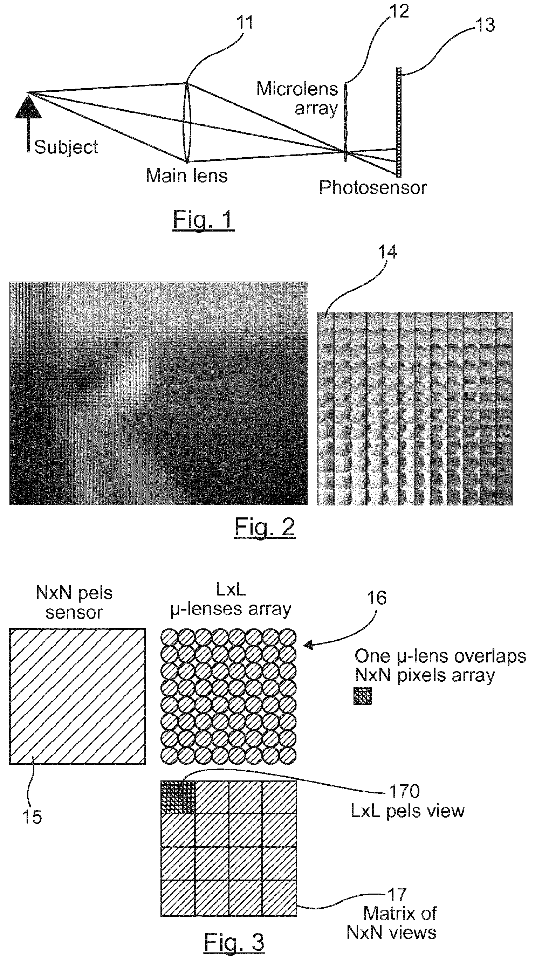

The present disclosure focuses more precisely on light field based image captured by a plenoptic device as illustrated by **Figure 1** and disclosed by R. Ng, et al. in "Light field photography with a hand-held plenoptic camera" Standford University Computer Science Technical Report CSTR 2005-02, no. 11 (April 2005*).

Such plenoptic device is composed of a main lens (11), a micro-lens array (12) and a photo-sensor (13). More precisely, the main lens focuses the subject onto (or near) the micro-lens array. The micro-lens array (12) separates the converging rays into an image on the photo-sensor (13) behind it.

A micro-image is the image (14) formed on the photo-sensor behind a considered micro-lens of the micro-lens array (12) as illustrated by **Figure 2**. The image on the left corresponds to raw data and the image on the right corresponds to details of micro-images representative of in particular a seagull's head. Micro-images resolution and number depend on micro-lenses size with respect to the sensor. More precisely, the micro-image resolution varies significantly depending on devices and applications (from 2x2 pixels up to around 100x100 pixels).

Then, from every micro-image, sub-aperture images are reconstructed. Such a reconstruction consists in gathering collocated pixels from every micro-image. The more numerous the micro-lenses, the higher the resolution of sub-aperture images. As illustrated by **Figure 3**, considering that one micro-lens overlaps NxN pixels of the photo-sensor (15), the NxN matrix of views (17) is obtained by considering that the $a^{th}$ view contains all the LxL $a^{th}$ pixels overlapped by each micro-lens of the micro-lens array (16) comprising LxL micro-lenses, where "x" is a multiplication operator.

More precisely, on **Figure 3**, L=8 and N=4, the first view 300 thus comprises the first of the sixteen pixels covered by each micro-lens of the 64 micro-lenses of the considered micro-lens array.

Sub-aperture images reconstruction requires de-mozaicing. Techniques for recovering the matrix of views from raw plenoptic material are currently developed such as the one disclosed by N. Sabater et al. in "Light field demultiplexing and disparity estimation" International Conference on Complementary Problems ICCP 2014*.

Contrary to the plenoptic device, camera array devices, such as the Pelican Imaging® camera, deliver directly matrices of views (i.e. without de-mozaicing).

State of Art methods for encoding such light field based images consists in using conventional image or video codecs (such as JPEG, JPEG-2000, MPEG4 Part 10 AVC, HEVC). However, such standard codecs are not able to take into account the specificities of light field imaging (aka plenoptic data), which records the amount of light (the "radiance") at every point in space, in every direction. Indeed, such conventional image or video codecs delivers conventional imaging formats.

Among the many new light field imaging functionalities provided by these richer sources of data, is the ability to manipulate the content after it has been captured. These manipulations may have different purposes, notably artistic, task-based and forensic. For instance, it would be possible for users to change, in real time, focus, field of depth and stereo baseline, as well as the viewer perspective. Such media interactions and experiences are not available with conventional imaging formats that would be obtained by using the conventional image or video codecs to encode/decode light field based images.

It would hence be desirable to provide a technique for encoding/decoding light field based images that would not show these drawbacks of the prior art. Notably, it would be desirable to provide such a technique, which would allow a finer rendering of objects of interest of decoded images obtained from light field based images.

### 3. Summary

The following presents a simplified summary of the disclosure in order to provide a basic understanding of some aspects of the disclosure. This summary is not an extensive overview of the disclosure. It is not intended to identify key or critical elements of the disclosure. The following summary merely presents some aspects of the disclosure in a simplified form as a prelude to the more detailed description provided below.

The disclosure sets out to remedy at least one of the drawbacks of the prior art with a method for encoding a matrix of views obtained from light-field data.

Such encoding method comprises, for at least one group of views of said matrix of views:

- obtaining information representative of a type of encoding of said group of views and encoding said information in a data stream, said type of encoding corresponding to an epipolar plane image (EPI) encoding of said group of views using at least one part of epipolar plane image, or said type of encoding corresponding to a view by view encoding of said group of views according to a views' encoding order,
- encoding said group of views in said data stream responsive to said information representative of a type of encoding, wherein, in the case where said type of encoding is an epipolar plane image encoding, encoding said group of views comprises:
- obtaining at least one part of an epipolar plane image (EPI) associated with said group of views; and

- encoding said at least one part of an epipolar plane image.

The present disclosure thus relies on a novel and inventive approach for encoding a matrix of views obtained from light-field data by benefiting from one or both of two different types of encoding: on the one hand a "view by view encoding", and on the other hand an "epipolar plane image encoding".

By "view by view encoding", it is considered according to the present disclosure that according to a views' encoding order, views are encoded one after the other, and pixel by pixel for each view.

Concerning the "epipolar plane image encoding", also called EPI encoding in the following, and as disclosed by B. Goldluecke et al. in "The Variational Structure of Disparity and Regularization of 4D Light Fields" pp 1003-1010 2013 IEEE Conference on Computer Vision and Pattern Recognition, a horizontal (respectively a vertical) epipolar plane image is a 2D image, built by stacking all views of a matrix of views along a line (respectively a column) of views of said matrix of view, on top of each other, and corresponds to a cut through the obtained stack along a same line of each stacked view (respectively along a same column of each stacked view).

Such epipolar plane images or parts of epipolar plane images are characterized by linear structures providing specific linear properties, from which an encoding can benefit from, as an alternative to a "view by view encoding". Indeed, these linear structure smatch well with the spatial directional prediction of the current encoder like e.g. HEVC and H.264.

As a consequence an "epipolar plane image encoding" consists in encoding at least, pixels by pixels, a part of epipolar plane image, a whole epipolar plane image or several epipolar plane images associated with said group of views of said matrix of views, instead of said views as such.

In comparison with a "view by view encoding", using epipolar plane images permits to exploit the properties of the four-dimensional (4D) light field of the scene, since their building is based on the stacking of views representing the light from different viewpoints of that scene, i.e. viewpoints of a same line of the matrix of views for a horizontal epipolar plane image, of a same column of the matrix of views for a vertical epipolar plane image.

It has to be noted that B. Goldluecke in *"The Variational Structure of Disparity and Regularization of 4D Light Fields"* neither discloses nor suggests to use epipolar plane images during an encoding/decoding process for optimizing the encoding of a matrix of views, but use epipolar plane images for deriving differential constraints on a vector field on epipolar plane image space to enable consistent disparity field related to the regularization of more general vector-valued functions on the 4D ray space of the light field.

According to the present disclosure, the encoding of a matrix of views is, as a consequence, suitable for implementing two different types of encoding depending on the encoding performances, which are aimed at.

According to a particular aspect of said disclosure, obtaining information representative of a type of encoding of said group of views comprises a selection of said type of encoding between at least said type of encoding corresponding to an epipolar plane image encoding of said group of views using at least one part of epipolar plane image, or said type of encoding corresponding to a view by view encoding of said group of views according to a views' encoding order.

Such a selection between at least two types of encoding, at least one involving the use of at least one part of epipolar plane image, permits to enhance the encoding by taking into account the contribution of epipolar plane images.

According to a particular aspect of said disclosure, obtaining information representative of a type of encoding of said group of views comprises:

- obtaining at least one part of an epipolar plane image associated with said group of views,
- using , for example, a rate distortion criterion for determining an encoding of said group of views by comparing at least:

    o a first encoding cost associated with an epipolar plane image encoding of said group of views using said at least one part of epipolar plane image and,
    o a second encoding cost associated with a view by view encoding of said group of views according to said views' encoding order,

In other words, depending on a rate distortion criterion, the best encoding of said group of views is selected among at least the two types of encoding that the encoder is able to perform, said at least two types of encoding corresponding on the one hand to a view by view encoding and on the other hand to an epipolar plane image encoding.

As a consequence, the present disclosure provides a selection of a type of encoding permitting to optimize the encoding of a group of views of said matrix of views according to a rate distortion criterion, giving the encoding structure that provides the best compromise in terms of reconstruction errors of encoding.

According to a first embodiment of the present disclosure, said group of views corresponds to the whole matrix of views, and said obtaining of at least one part of epipolar plane image associated with said group of views corresponds to the obtaining of a matrix of horizontal epipolar plane images associated with said matrix of views and/or to the obtaining of a matrix of vertical epipolar plane images associated with said matrix of views.

In other words, according to this first embodiment, the whole matrix of views will be encoded by using a "view by view encoding" or by using an "epipolar plane image encoding", said type of encoding being selected for example by comparing, according to a rate distortion criterion, the encoding cost associated with each type of encoding.

Consequently, according to this first embodiment one type of encoding is selected for the whole matrix of views.

According to a second embodiment of the present disclosure, said group of views corresponds to a whole column of views of said matrix of views, and said obtaining of at least one part of epipolar plane image associated with said group of views corresponds to the obtaining of a column of vertical epipolar plane images associated with said column of views.

It has to be noted that according to this second embodiment, one type of encoding is selected per considered column of views. As a consequence, there will be as much information representative of a type of encoding as the number D of columns of said matrix of views.

Such an encoding of a matrix of views using a column of views encoding segmentation permits to enhance the encoding performances since the best encoding type is determined for each column of views instead of for the whole matrix of views as such.

According to a third embodiment of the present disclosure, said group of views corresponds to a whole line of views of said matrix of views, and said obtaining of at least one part of epipolar plane image associated with said group of views corresponds to the obtaining of a line of horizontal epipolar plane images associated with said line of views.

It has to be noted that according to this third embodiment, one type of encoding is selected per considered line of views. As a consequence, there will be as much information representative of a type of encoding as the number B of lines of said matrix of views.

Such an encoding of a matrix of views using a line of views encoding segmentation permits to enhance the encoding performances since the best encoding type is determined for each line of views instead of for the whole matrix of views as such.

According to a fourth embodiment of the present disclosure, respecting the views' encoding order of said matrix of views, said group of views corresponds to a set of K consecutive views of a line of views comprising D views of said matrix of views, with K an integer such that K<D, and said obtaining of at least one part of epipolar plane image associated with said group of views corresponds to the obtaining of K corresponding lines of horizontal epipolar plane images associated with said line of views.

Such an encoding of a matrix of views using a part of a line of views as an encoding segmentation permits to enhance the encoding performances since the best encoding type is determined using an encoding level of segmentation lower than a line of views, and thus lower than a matrix of views.

According to a fifth embodiment of the present disclosure, respecting the views' encoding order of said matrix of views, said group of views corresponds to a set of Q consecutive views of a column of views comprising B views of said matrix of views, with Q an integer such that Q<B, and said obtaining of at least one part of epipolar plane image associated with said group of views corresponds to the obtaining of Q corresponding columns of vertical epipolar plane images associated with said column of views.

As indicated regarding the fourth embodiment, similarly, using a part of a column of views as an encoding segmentation permits to enhance the encoding performances since the best encoding type is determined using an encoding level of segmentation lower than a column of views, and thus lower than a matrix of views.

According to a particular aspect of said fourth and fifth embodiments, said integer(s) K and/or Q correspond(s) to a minimum value of consecutive views or to a modulo of said minimum value.

Indeed, said minimum value permits to use a standard encoding such as a block or a macroblock encoding. For example, considering the case wherein the encoder uses a macroblock of 16x16 pixels, K and/or Q = 16 or a modulo of 16, and sixteen (or a modulo of sixteen) consecutives views of a line or a column of views correspond respectively to sixteen consecutives lines or columns in an horizontal or vertical epipolar plane image.

According to another particular aspect of the present disclosure, at least two distinct groups of views of said matrix of views are encoded using two different types of encoding.

For example, a first group of views is encoded using view by view encoding, a second group of views is encoded using a vertical epipolar plane image encoding and a third group of views is encoded using an horizontal epipolar plane image, each type of encoding providing for each group of views to which it is associated the best encoding performances, minimizing for example a rate-distortion cost.

According to another particular aspect of the present disclosure said information representative of a type of encoding of said group of views comprises at least two elements:

- at least one element representative of a number of views of said group of views, and
- one element representative of a type of encoding associated with said best encoding of said group of views.

In other words, syntax elements indicating the specific view/EPI encoding Said elements permit the decoder to determine the corresponding decoding to implement.

Another aspect of the present disclosure pertains to a signal representative of a matrix of views obtained from light-field data, wherein said signal comprises, for at least one group of views of said matrix of views, at least:

- information representative of a type of encoding of said group of views, said type of encoding corresponding to an epipolar plane image encoding of said group of views using at least one part of epipolar plane image, or said type of encoding corresponding to a view by view encoding of said group of views according to a views' encoding order,
- encoding information associated with said group of views. Another aspect of the present disclosure concerns a recording medium bearing a signal as described above.

Another aspect of the present disclosure pertains to a method for decoding a data stream representative of a matrix of views obtained from light-field data.

Such decoding method comprises, for at least one group of views of said matrix of views:

- decoding information representative of a type of encoding of said group of views from said data stream, said type of encoding corresponding to an epipolar plane image encoding of said group of views using at least one part of epipolar plane image, or said type of encoding corresponding to a view by view encoding of said group of views according to a views' encoding order,
- decoding said group of views from said data stream responsive to said information representative of a type of encoding wherein, in the case where said type of encoding is an epipolar plane image encoding, decoding said group of views comprises :
- decoding at least one part of an epipolar plane image associated with said group of views; and
- obtaining said group of views from said at least one part of an epipolar plane image.

Such a method for decoding is especially suited to decode a signal encoded according to the above-described encoding method.

The characteristics and advantages of this decoding method are the same as those of the encoding method. Consequently, they shall not be described in greater detail.

According to a particular aspect of said decoding method, said decoding of an information representative of a type of encoding of said group of views comprises at least:

- decoding at least one element representative of a number of views of said group of views, and
- decoding one element representative of a type of encoding associated with said group of views.

Another aspect of the present disclosure pertains to a device for encoding a matrix of views obtained from light-field data. Such a device comprises a processor configured to control, for at least one group of views of said matrix of views:

- means for obtaining information representative of a type of encoding of said group of views and encoding said information in a data stream, said type of encoding corresponding to an epipolar plane image encoding of said group of views using at least one part of epipolar plane image, or said type of encoding corresponding to a view by view encoding of said group of views according to a views' encoding order,
- means for encoding said group of views in said data stream responsive to said information representative of a type of encoding, wherein, in the case where said type of encoding is an epipolar plane image encoding, encoding said group of views comprises :
- means for obtaining at least one part of an epipolar plane image (EPI) associated with said group of views; and
- means for encoding said at least one part of an epipolar plane image.

Such an encoding device is adapted especially for implementing the method for encoding as described here above.

Another aspect of the present disclosure pertains to a device for decoding a data stream representative of a matrix of views obtained from light-field data. Such a device comprises a processor configured to control, for at least one group of views of said matrix of views:

- means for decoding information representative of a type of encoding of said group of views from said data stream, said type of encoding corresponding to an epipolar plane image encoding of said group of views using at least one part of epipolar plane image, or said type of encoding corresponding to a view by view encoding of said group of views according to a views' encoding order,
- means for decoding said group of views from said data stream responsive to said information representative of a type of encoding wherein, in the case where said type of encoding is an epipolar plane image encoding, decoding said group of views comprises :
- means for decoding at least one part of an epipolar plane image associated with said group of views; and
- means for obtaining said group of views from said at least one part of an epipolar plane image.

Such a decoding device is adapted especially for implementing the method for decoding as described here above.

The disclosure relates thus to devices comprising a processor configured to implement the above methods.

The present disclosure also concerns a computer program comprising software code adapted to perform a method for encoding a matrix of views obtained from light-field data and/or decoding a data stream representative of a matrix of views obtained from light-field data as described above.

Said computer program being a product downloadable from a communication network and/or recorded on a medium readable by a computer and/or executable by a processor, comprising program code instructions for implementing one of the methods according to the present disclosure.

The present disclosure also concerns a non-transitory program storage device, readable by a computer, tangibly embodying a program of instructions executable by the computer to perform a method for encoding a matrix of views obtained from light-field data and/or decoding a data stream representative of a matrix of views obtained from light-field data as described above.

Such a computer program may be stored on a computer readable storage medium. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a read--only memory (ROM); an erasable programmable read--only memory (EPROM or Flash memory); a portable compact disc read--only memory (CD-ROM); an optical storage device; a magnetic storage device; or any suitable combination of the foregoing.

It is to be understood that both the foregoing general description and the following detailed description are exemplary and explanatory and are not restrictive of the invention, as claimed.

It must also be understood that references in the specification to "one embodiment" or "an embodiment", indicate that the embodiment described may include a particular feature, structure, or characteristic, but every embodiment may not necessarily include the particular feature, structure, or characteristic.

Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

The specific nature of the disclosure as well as other objects, advantages, features and uses of the disclosure will become evident from the following description of embodiments taken in conjunction with the accompanying drawings.

## 4. Brief description of the drawings

Embodiments of the invention can be better understood with reference to the following description and drawings, given by way of example and not limiting the scope of protection, and in which:

- **Figure 1**, already presented in relation with prior art, shows the conceptual schematic of a plenoptic camera;
- **Figure 2**, already presented in relation with prior art, shows an example of picture shot with a plenoptic camera;
- **Figure 3** already presented in relation with prior art, shows respectively a camera sensor (15), et microlens array (16) and a matrix of views (17);
- **Figure 4** shows the building of an epipolar plane image obtained from a matrix of views;
- **Figure 5** shows schematically a diagram of the main steps of the method for encoding according to a first embodiment of the present disclosure;
- **Figure 6** schematically illustrates three embodiments of the present disclosure;
- **Figure 7** schematically illustrates a particular aspect of a fourth embodiment of the present disclosure;
- **Figure 8** schematically illustrates the encoding of a matrix of views using at least two different types of encoding;
- **Figure 9** shows schematically a diagram of the steps of the method for decoding according to the present disclosure;
- **Figure 10** shows an example of architecture of a device in accordance with an embodiment of the disclosure;
- **Figure 11** schematically illustrates the structure of a signal representative of a matrix of views obtained from light field data according to the present disclosure.

Similar or same elements are referenced with the same reference numbers. The components in the figures are not necessarily to scale, emphasis instead being placed upon illustrating the principles of the invention.

## 5. Detailed description

*5.1 General Principle*

The general principle of the present disclosure consists in a new way of encoding a matrix of views obtained from light-field data, by determining the type of encoding of at least one group of views of said matrix of views, said type of encoding being selected among at least two types of encoding, on the one hand an epipolar plane image encoding and on the other hand a view by view encoding.

In other words, an encoding technique is selected at the encoder side. Information for identifying the selected encoding technique is sent to the decoder side so as to decode the stream. Such encoding according to the present disclosure may be performed for the entire matrix of views, by columns, by lines or by group of consecutive views of a line or of a column, the signalling syntax being adapted to take such an encoding segmentation into account and thus inform the decoder appropriately.

Various non-limiting embodiments of encoding and decoding methods, of corresponding devices and of a computer-readable storage medium for encoding/decoding a matrix of views obtained from light-field data are disclosed in the next sections.

This disclosure may, however, be embodied in many alternate forms and should not be construed as limited to the embodiments set forth herein. Accordingly, while the disclosure is susceptible to various modifications and alternative forms, specific embodiments thereof are shown by way of example in the drawings and will herein be described in detail. It should be understood, however, that there is no intent to limit the disclosure to the particular forms disclosed, but on the contrary, the disclosure is to cover all modifications, equivalents, and alternatives falling within the spirit and scope of the disclosure as defined by the claims.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises", "comprising," "includes" and/or "including" when used in this specification, specify the presence of stated features, integers, steps, operations, elements, and/or components but do not preclude the presence or addition of one or more other features, integers, steps, operations, elements, components, and/or groups thereof.

Moreover, when an element is referred to as being "responsive" or "connected" to another element, it can be directly responsive or connected to the other element, or intervening elements may be present. In contrast, when an element is referred to as being "directly responsive" or "directly connected" to other element, there are no intervening elements present. As used herein the term "and/or" includes any and all combinations of one or more of the associated listed items and may be abbreviated as"/".

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element without departing from the teachings of the disclosure.

Although some of the diagrams include arrows on communication paths to show a primary direction of communication, it is to be understood that communication may occur in the opposite direction to the depicted arrows.

Some embodiments are described with regard to block diagrams and operational flowcharts in which each block represents a circuit element, module, or portion of code which comprises one or more executable instructions for implementing the specified logical function(s). It should also be noted that in other implementations, the function(s) noted in the blocks might occur out of the order noted. For example, two blocks shown in succession may, in fact, be executed substantially concurrently or the blocks may sometimes be executed in the reverse order, depending on the functionality involved.

Reference herein to "one embodiment" or "an embodiment" means that a particular feature, structure, or characteristic described in connection with the embodiment can be included in at least one implementation of the disclosure. The appearances of the phrase "in one embodiment" or "according to an embodiment" in various places in the specification are not necessarily all referring to the same embodiment, nor are separate or alternative embodiments necessarily mutually exclusive of other embodiments.

Reference numerals appearing in the claims are by way of illustration only and shall have no limiting effect on the scope of the claims.

While not explicitly described, the present embodiments and variants may be employed in any combination or sub-combination.

The disclosure is described for encoding/decoding pixels of a view of a matrix of views obtained from light-field data but extends to the encoding/decoding of a sequence of a matrix of views obtained from light-field data (plenoptic video) because each matrix of views belonging to the sequence is sequentially encoded/decoded as described below.

*5.2 The encoding method*

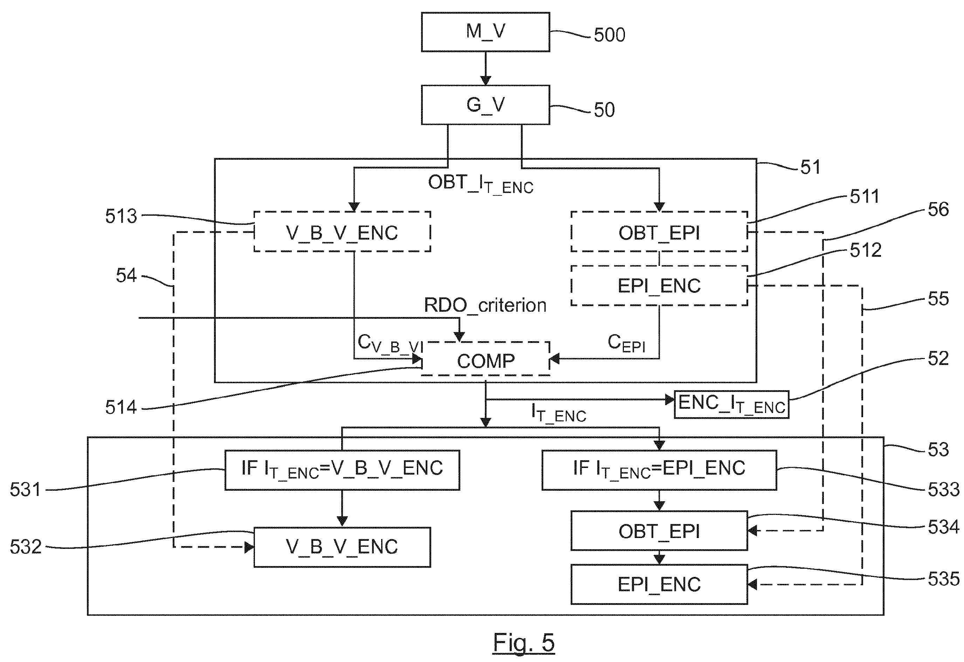

**Figure 5** shows schematically a diagram of the main steps of the method for encoding according to the present disclosure, the method being performed by an encoder.

According to the present disclosure, the method for encoding a matrix of views (500) obtained from light-field data, as represented on **Figure 3**, may be implemented by a processor and comprises, first, for at least one group of views (50) of the matrix of views, obtaining (51) information $I_{T\_ENC}$ representative of a type of encoding of the group of views (50) and encoding (52) the information in a data stream.

More precisely, the type of encoding of the group of views (50) corresponds either to an epipolar plane image encoding (EPI_ENC) of the group of views using at least one part of epipolar plane image (EPI), or to a view by view encoding (V_B_V_ENC) of the group of views according to a views' encoding order.

For example, the views' encoding order consists in a raster scan encoding of the matrix of views, and consists in encoding view by view each line, from left to right within a line and line by line from top to bottom.

Other view by view encoding can be considered such as the one consisting in encoding view by view each column, from top to bottom within a column and column by column from left to right.

According to a particular feature, the information ($I_{T\_ENC}$) representative of a type of encoding of the group of views (50) may be obtained directly from an external device/module/medium.

According to another embodiment, illustrated in dotted lines in **Figure 5,** obtaining (51) information ($I_{T\_ENC}$) representative of a type of encoding of the group of views (50) comprises:

- obtaining (511) at least one part of an epipolar plane image associated with the group of views (50),
- using a rate distortion criterion for determining an encoding of the group of views by comparing (514) at least:

  o a first encoding cost ($C_{EPI}$) associated with an epipolar plane image encoding (512) of the group of views using the at least one part of epipolar plane image and,
  o a second encoding cost ($C_{V\_B\_V}$) associated with a view by view encoding (513) of the group of views according to a the views' encoding order.

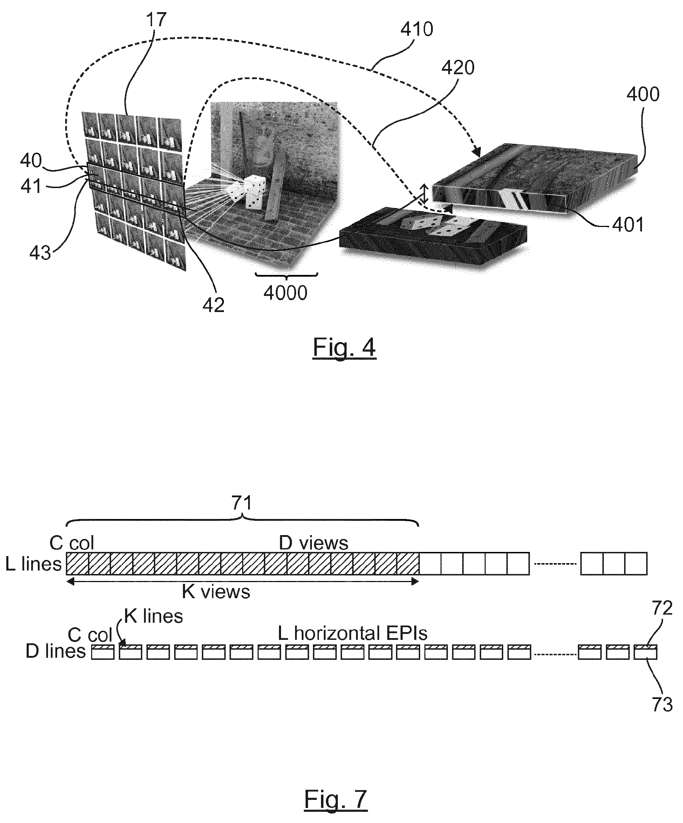

A method for obtaining (511) at least one part of an epipolar plane image associated with the group of views (50) is illustrated by **Figure 4** and disclosed by B. Goldluecke et al. in "The Variational Structure of Disparity and Regularization of 4D Light Fields" pp 1003-1010 2013 IEEE Conference on Computer Vision and Pattern Recognition.

The matrix of views (17) represents a 4D light field as a collection of images of a scene (4000), where the focal points of the cameras lie in a 2D plane.

In a non-limiting embodiment, obtaining (511) at least one part of an epipolar plane image comprises stacking all images along a line (40) of viewpoints on top of each other. Specifically, the first image (41) of the line (40) is on the top of the stack (400) as represented by the arrow (410). The last image (42) of the line (40) is below the stack (400) as represented by the arrow (420). A cut (401) through this stack (400) is performed along the same line (43) of each view. Such a cut is a horizontal epipolar plane image (EPI).

In other words, considering a matrix of views composed of BxD views (in **Figure 4** B=D=5) of indexes v,u respectively in line and column, and each views of size LxC pixels, of indexes t, s respectively in line and column, the horizontal EPI, as represented on **Figure 4** $E_h^{v,t}$ with v=0,...,B-1 of size DxC is realized by stacking the $t^{th}$ row of all the $v^{th}$ views. In other words, the epipolar plane image is a 2D image, built by stacking one over the other, the view lines (fixed t coordinate corresponding to the view line (43)) from all views along a line of the (u,v) plane of the matrix of views (17) (fixed v coordinate corresponding to the line (40)).

Similarly, the vertical EPI $E_v^{u,s}$ with u=0,...,D-1 of size LxB is realized by stacking the $s^{th}$ column of all the $u^{th}$ views.

The at least one epipolar plane image (EPI) may be a horizontal epipolar plane image (EPI), or a vertical epipolar plane image.

As can be noted on **Figure 4**, an epipolar plane image (EPI) presents directional structures that can be interestingly used in the context of spatial and inter epipolar plane image encoding in comparison to the column or line of views of the considered matrix of views (17).

Concerning the use of a rate distortion criterion, RDO criterion in the following (Rdo for Rate distortion optimization), for comparing (514) at least an encoding cost ($C_{EPI}$) associated with an epipolar plane image encoding (512) and an encoding cost ($C_{V\_B\_V}$) associated with a view by view encoding (513) of the group of views according to the views' encoding order, the RDO criterion is used to select an encoding strategy that gives a good Rate/distortion compromise.

Indeed, the RDO technique takes into account the distortions and the encoding costs of the current matrix of views to encode, the RDO criterion corresponding to the encoding structure that provides the good compromise in terms of reconstruction errors and encoding. To this end, the classical RDO criterion is based on:

- the bit encoding cost $Rt_e$ required to encode the image according to the type of encoding e structure (according to the present disclosure, the type of encoding e corresponding to an epipolar plane image encoding (EPI_ENC) or to a view by view encoding (V_B_V_ENC)),
- the distortion $Dist_e$ between the original group of views (50) and the reconstructed one according to the type of encoding e with: $Dist_e = \sum_{p \in Y_k}(Y_{or}(p) - Y_{dec}(p))^2$ where:

  $Y_{or}(p)$ a pixel of the original group of views (50), of index p,

  $Y_{dec}(p)$ a pixel of the reconstructed (or decoded) group of views,
  $p \in Y_k$: indicating all the pixels of the group of views with here k=or or k=dec.

The associated rate-distortion cost $Cst_e$ is:

$$Cst_e = Dist_e + \lambda.Rt_e$$

where $\lambda$ is a Lagrangian multiplier as disclosed by T. Wiegand et al. in "Lagrange multiplier selection in hybrid video coder control" pp 542-545 vol.3 2011 International Conference on Image Processing, $Dist_e$ is the distortion of the reconstructed group of views $Y_{dec}^e$ via a given strategy of e index, which is calculated by sum of squared differences $Dist_e$ between the original pixels of the group of views $Y_{or}$ and the reconstructed (or decoded) group of views $Y_{dec}^e$. The rate-distortion cost $Cst_e$ is the cost of bit-rate after the entropy encoding process.

Finally, the selected encoding type of $e_{stg}$ index corresponds to the minimum of rate distortion Rd from E possible types: $e_{stg} = \underset{e}{Argmin}\{Cst_e\}.$

As illustrated by **Figure 5**, when the type of encoding e corresponds to an epipolar plane image encoding (EPI_ENC), the associated rate-distortion cost is such that $Cst_e = C_{EPI}$. When the type of encoding e corresponds to a view by view encoding (V_B_V_ENC), the associated rate-distortion cost is such that $Cst_e = C_{V\_B\_V}$.

Once the information $I_{T\_ENC}$ representative of a type of encoding of the group of views (50) is obtained (51), the information $I_{T\_ENC}$ is encoded (52) and inserted into a data stream to inform the decoder.

In addition, once the information $I_{T\_ENC}$ representative of a type of encoding of the group of views (50) is obtained (51), the encoding of the group of views (50) is performed (53).

More precisely, if the information $I_{T\_ENC}$ representative of a type of encoding of the group of views (50) corresponds (531) to a view by view encoding, the view by view encoding is performed (532). In the case where the type of encoding is (533) an epipolar plane image encoding, encoding the group of views (50) comprises obtaining (534) at least one part of an epipolar plane image (EPI) associated with the group of views and encoding (535) the at least one part of an epipolar plane image.

The views and the EPIs can be encoded (532, 535 respectively) with an encoder in intra or inter views and inter EPIs with mono and bidirectional predictions.

It can be noted that the current EPI prediction can come from the previously reconstructed (decoded) EPI parts, and that these parts of the EPI may be encoded/decoded using a view by view encoding.

It has to be noted that in the case where the information $I_{T\_ENC}$ representative of a type of encoding of the group of views (50) is determined (511, 512, 513, 514) by the encoding device and not provided by an external device/module/medium, the following steps of view by view encoding (513) are performed during the obtaining (51) of information ($I_{T\_ENC}$) representative of a type of encoding: obtaining (511) at least one part of an epipolar plane image (EPI) associated with the group of views, and encoding (512) the at least one part of an epipolar plane image.

As a consequence, when such an option is implemented, the result of the view by view encoding (513) or of the EPI encoding (512) is reused and selected (54 and 55, 56) according to the obtained information $I_{T\_ENC}$. This makes it possible to avoid one more encoding of the group of views with respect to the ones already implemented during the step of obtaining (51) of the information $I_{T\_ENC}$(50).

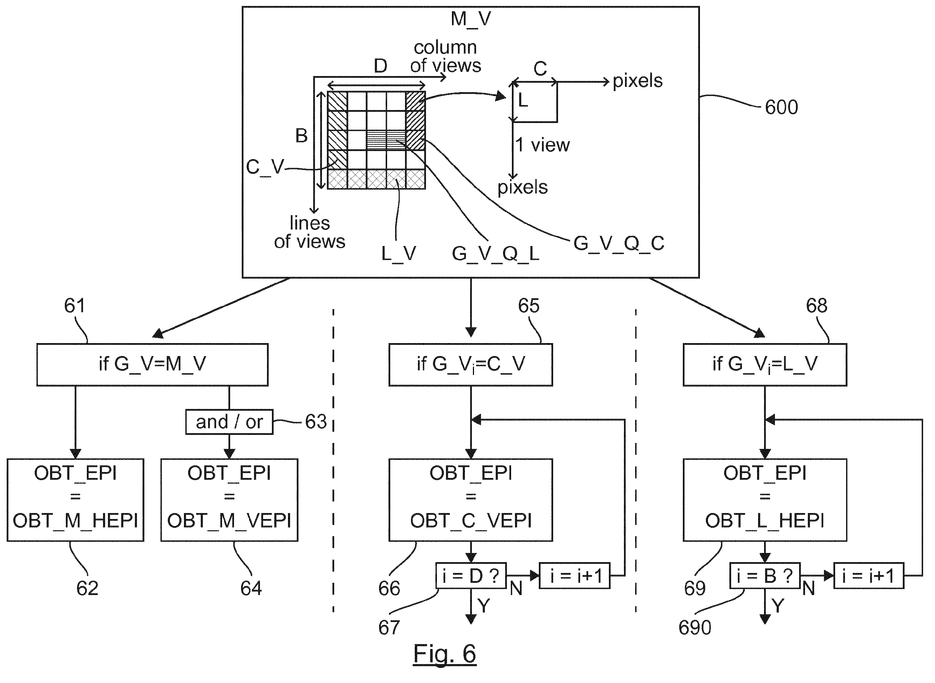

In particular three embodiments according to the present disclosure are illustrated by **Figure 6**. More precisely, these three embodiments depend on the nature of the group of views (50) of the matrix of views (600) to encode.

In a first embodiment, a matrix of views (600) composed of BxD views of indexes v,u respectively in line and column is considered, each view being of size LxC pixels, of indexes t, s respectively in line and column. In this case, the group of views corresponds (61) to the whole matrix of views (600), and obtaining (534) at least one part of epipolar plane image associated with the group of views comprises: obtaining (62) of a matrix of horizontal epipolar plane images associated with the matrix of views; and/or (63) obtaining (64) a matrix of vertical epipolar plane images associated with the matrix of views. In the case where the group of views corresponds to the whole matrix of views (600), the associated matrix of horizontal epipolar plane images comprises LxB horizontal epipolar plane images, each horizontal epipolar plane image comprising DxC pixels. In the same way, the associated matrix of vertical epipolar plane images comprises DxC vertical epipolar plane images, each vertical epipolar plane image comprising LxB pixels.

When both matrices of horizontal epipolar plane images and of vertical epipolar plane images are obtained, their respective encoding costs (e.g. rate-distortion cost) can be compared with the encoding cost associated with the "view by view" encoding, and an encoding type, corresponding for example to the minimum of rate distortion cost, is selected among this three different types of encoding.

In other words, in this case two $C_{EPI}$ costs are computed, one $C_{hEPI}$ corresponding to the matrix of horizontal epipolar plane images and the other $C_{vEPI}$ corresponding to the matrix of vertical epipolar plane images.

More precisely, to select an encoding type for the whole matrix of views (600), three costs are computed using for example a RDO criterion:

$$C_{V\_B\_V} = \text{Dist}_{V\_B\_V} + \lambda. \text{Rt}_{V\_B\_V},$$

$$C_{hEPI} = \text{Dist}_{hEPI} + \lambda. \text{Rt}_{hEPI}$$

$$C_{vEPI} = \text{Dist}_{vEPI} + \lambda. \text{Rt}_{vEPI}$$

The selected encoding type of $e_{stg}$ index corresponds to the minimum of rate distortion Rd from E=3 possible types: $e_{stg}$ = Argmin$\{C_{V\_B\_V}, C_{hEPI}, C_{vEPI}\}$. It will be appreciated, however, that the present principles are not restricted to a RDO criterion for the selection of a type of encoding. Other criterion may be used.

Once the encoding type is selected, the encoding using said type of encoding is performed. If the "view by view" encoding is selected, the matrix of views is encoded view by view according to a given views order. If the horizontal EPI encoding is selected, the matrix of horizontal EPIs is encoded EPI by EPI according to a given EPI order (e.g, raster scan order, EPI by EPI within an EPI column and then column by column, EPI by EPI within an EPI line and then line by line). If the vertical EPI encoding is selected, the matrix of vertical EPIs is encoded EPI by EPI according to a given EPI order (e.g, raster scan order, EPI by EPI within an EPI column and then column by column, EPI by EPI within an EPI line and then line by line).

In a second embodiment, the group of views corresponds (65) to a whole column (C_V) of B views of the matrix of views (600). In this case, obtaining at least one part of epipolar plane image associated with the group of views comprises obtaining (66) a column of vertical epipolar plane images associated with the column of views.

In the case where the group of views corresponds to a whole column of B views (C_V) of the matrix of views (600) composed of BxD views, the associated column of vertical epipolar plane images comprises C vertical epipolar plane images of LxB pixels.

It has to be noted that according to this second embodiment, all the matrix of views is processed column by column, and one type of encoding is selected per considered column of views. As a consequence, there will be (67) as much information representative of a type of encoding as the number D of columns of the matrix of views.

More precisely, to select an encoding type for each column of B views (C_V) of the matrix of views (600), two costs per column of views are computed using a RDO criterion:

$$C_{V\_B\_V} = \text{Dist}_{V\_B\_V} + \lambda. \text{Rt}_{V\_B\_V},$$

$$C_{vEPI} = Dist_{vEPI} + \lambda. Rt_{vEPI}$$

The selected encoding type of $e_{stg}$ index corresponds to the minimum of rate distortion *Rd* from E=2 possible types: $e_{stg}$ = Argmin{$C_{V\_B\_V}$, $C_{vEPI}$}.

In a third embodiment, the group of views corresponds (68) to a whole line (L_V) of views of the matrix of views. In this case, obtaining at least one part of epipolar plane image associated with the group of views comprises obtaining (69) a line of horizontal epipolar plane images associated with the line of views.

In the case where the group of views corresponds to a whole line of D views of the matrix of views (600) composed of BxD views, the associated line of horizontal epipolar plane images comprises L horizontal epipolar plane images of DxC pixels.

It has to be noted that according to this third embodiment, all the matrix of views is processed line by line, and one type of encoding is selected per considered line of views. As a consequence, there will be (690) as much information representative of a type of encoding as the number B of lines of the matrix of views.

More precisely, to select an encoding type for each line of B views (L_V) of the matrix of views (600), two costs per line of views are computed using a RDO criterion:

$$C_{V\_B\_V} = Dist_{V\_B\_V} + \lambda. Rt_{V\_B\_V},$$

$$C_{hEPI} = Dist_{hEPI} + \lambda. Rt_{hEPI},$$

The selected encoding type of $e_{stg}$ index corresponds to the minimum of rate distortion Rd from E=2 possible types: $e_{stg}$ = Argmin{$C_{V\_B\_V}$, $C_{hEPI}$}.

In a fourth embodiment illustrated by **Figure 7**, respecting the views' encoding order of the matrix of views, the group of views (50) corresponds to a set of K consecutive views (71) of a line of views comprising D views of the matrix of views, with K an integer such that K<D. In this case obtaining at least one part of epipolar plane image associated with the group of views comprises obtaining K corresponding lines (72) of horizontal epipolar plane images associated with the line of views.

Thus, such a fourth embodiment permits to encode a part of a line of views using a view by view encoding whereas the other part is encoded using an horizontal EPI encoding.

More precisely, as illustrated in **Figure 7**, in a line comprising D views, sixteen views (71) of L x C pixels are encoded using a view by view encoding (the view by view encoding providing a minimum rate distortion cost). These sixteen first views (71) correspond to the sixteen first lines (72) in each horizontal EPI, the line of EPI being composed of L horizontal EPIs (of D x C pixels). The remaining views (of the line of D views) are encoded, in this example, by encoding each pixel of the (D-16) remaining lines (73) of each of the B horizontal associated EPis

In that particular case, the information representative of a type of encoding of such a group of views (50) comprises of syntax elements indicating, to the decoder, the type of encoding, but also the number of views of the group of views.

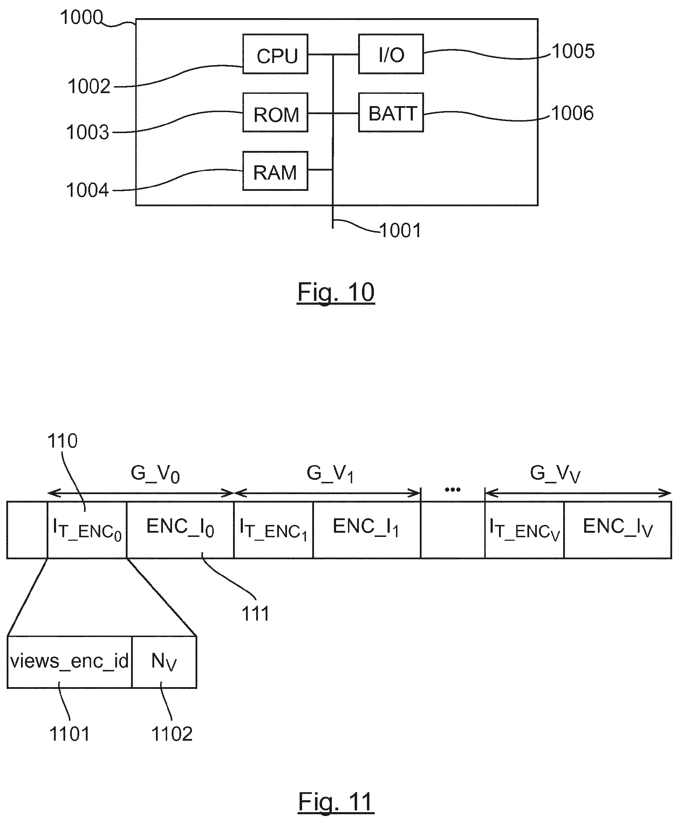

A structure of a signal (e.g data stream) representative of a matrix of views obtained from light-field data, comprising at least one group of views encoded according to the present disclosure is illustrated by **Figure 11**.

As represented on **Figure 11**, the signal is representative of a matrix of views comprising V groups of views G_V$_w$ with *w* being an integer such as $w \in [0, V]$.

For each group of views, the signal comprises:

- information I$_{T\_ENCw}$ (110) representative of a type of encoding of the group of views, the type of encoding corresponding to an epipolar plane image encoding of the group of views using at least one part of epipolar plane image, or the type of encoding corresponding to a view by view encoding of the group of views according to a views' encoding order,
- encoding ENC_I$_w$ (111) information associated with the group of views.

In a specific and non-limiting embodiment, information I$_{T\_ENCw}$ (110) representative of a type of encoding comprises a syntax element "views_enc_id" (1101) that indicates to the decoder a type of encoding and a syntax element "Nv" (1102) that indicates the number of views of the group of views is.

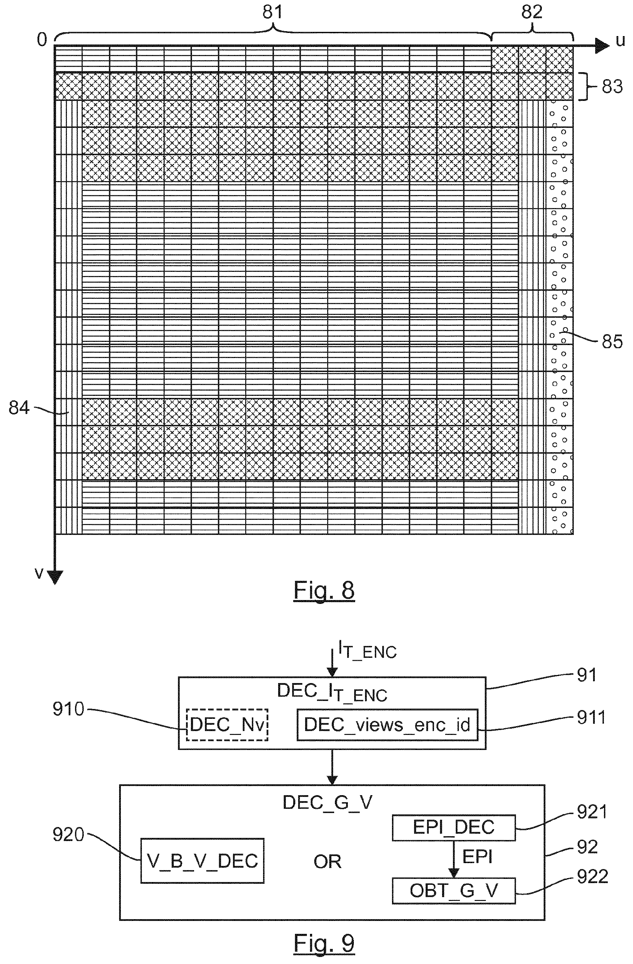

It can be noted that for one matrix of views (500) comprising several group of views, the number "Nv" of views per group of views (50) may vary from one group of views to another as illustrated in **Figure 8**, which is described in the following.

In the first embodiment, where the group of views corresponds to the whole matrix of views composed of BxD views of indexes v,u, all views of the matrix of views will be encoded using a same type of encoding. In this particular case, the information I$_{T\_ENCw}$ (110) representative of a type of encoding comprises at least two syntax elements indicating the number of views of the matrix of views. Indeed, the sizes of the matrix of views "matrix_size_u" and "matrix_size_v" need to be sent to the decoder. If the matrix of views is encoded with an horizontal EPI encoding type the syntax element matrix_size_v=B is for example used for encoding the matrix of horizontal EPIs (comprising LxB horizontal epipolar plane images) EPI by EPI within an EPI line comprising B horizontal EPI and then line by line. If the matrix of views is encoded with a vertical EPI encoding type, the syntax element matrix_size_u=D is for example used for encoding the matrix of vertical EPIs (comprising DxC vertical epipolar plane images) EPI by EPI within an EPI column comprising D vertical EPI and then column by column.

According to a particular aspect of the fourth embodiment, the integer(s) K correspond to a minimum value of consecutive views or to a modulo of the minimum value and corresponds also the number "Nv" of views per group of views (50).

Indeed, the minimum value permits to use a standard encoding such as a block or a macroblock encoding. For example, considering the case wherein the encoder uses a macroblock of 16x16 pixels, K = 16 or a modulo of 16, and sixteen (or a modulo of sixteen) consecutives views of a line of views correspond respectively to sixteen consecutives lines in an horizontal epipolar plane image.

Indeed, the vertical macroblock size *v* implies to encode a number of *K* views of v modulo, so as to correspond to *v* lines of an horizontal EPI structure with a macroblock encoding unit for example.

With respect to the fourth embodiment as illustrated by **Figure 7**, a fifth embodiment (not represented) of the present disclosure can also be implemented, wherein respecting the views' encoding order of the matrix of views, the group of views corresponds to a set of Q consecutive views of a column of views comprising B views of the matrix of views, with Q an integer such that Q<B, and the obtaining of at least one part of epipolar plane image associated with the group of views corresponds to the obtaining of Q corresponding columns of vertical epipolar plane images associated with the column of views. For the fourth and fifth embodiments, the horizontal and vertical coordinates, *First_view_u and First_view_v*, of the first view of the group of view need to be sent to the decoder.

**Figure 8** illustrates a combination of these fourth and fifth embodiments. In a matrix of views, at least two distinct groups of views of the matrix of views are encoded using two different types of encoding. In other words, the matrix of views illustrated in **Figure 8** is encoded with a mix of line of views (82,83), lines of horizontal EPIs (81), column of views (85) and columns of vertical EPIs (84).

More precisely, in **Figure 8**, the matrix of views is composed of BxD views (with B=18 and D=19) of indexes u,v respectively in column and line respectively.

It can be noted that according to the example illustrated in **Figure 8**, the selected encoding type for the group of views comprising the first view (0,0) to the view (15, 0) is an horizontal EPI encoding (hatched with horizontal full lines) here *First_view_u=0 and First_view_v=0.* For such a group of views (81), the syntax element indicating, to the decoder, the type of encoding is, for example, "views_enc_id = 3" and, the syntax element indicating the number of views of the group of views is "Nv = K = 16" corresponding to the size of a macroblock encoding unit. Indeed, in this particular case, and as illustrated in **Figure 7**, sixteen consecutives views of a line of views correspond respectively to sixteen consecutives lines in each of the L horizontal epipolar plane images. The EPI encoding of such a group using a macroblock unit will consist in encoding C/16 macroblocks of pixels within the first sixteen lines of the L horizontal epipolar plane images associated the group of views (81).

Concerning the group (82) of views comprising the first view (16,0) to the view (18, 0), the selected encoding type is an horizontal view by view encoding (hatched with horizontal dashed lines), here *First_view_u=16 and First_view_v=0.* For such a group of views (81), the syntax element indicating, to the decoder, the type of encoding is, for example, "views_enc_id = 2" and, the syntax element indicating the number of views of the group of views is "Nv = 3", each of the three views will be encoded using a macroblock of pixels as an encoding unit.

Concerning the group (83) of views comprising the first view (0,1) to the view (18,1), the selected encoding type is also an horizontal view by view encoding (hatched with horizontal dashed lines). For such a group of views (83), the syntax element indicating, to the decoder, the type of encoding is, for example, "views_enc_id = 2" and, the syntax element indicating the number of views of the group of views is "Nv = 19".

Concerning the group (84) of views comprising the first view (0,2) to the view (0, 17), the selected encoding type is a vertical EPI encoding (hatched with vertical full lines). For such a group of views (84), the syntax element indicating, to the decoder, the type of encoding is, for example, "views_enc_id = 1" and, the syntax element indicating the number of views of the group of views is "Nv = Q = 16".

Concerning the group (85) of views comprising the first view (18,2) to the view (18, 17), the selected encoding type is also a vertical view by view encoding (hatched with vertical dotted lines). For such a group of views (85), the syntax element indicating, to the decoder, the type of encoding is, for example, "views_enc_id = 0" and, the syntax element indicating the number of views of the group of views is "Nv = 16".

*5.3 The decoding method*

Referring now to Figure 9, the main steps of decoding implemented in a decoder suitable for decoding a signal (i.e. a data stream) representative of a matrix of views obtained from light-field data, are presented.

It is assumed that the decoder receives the signal representative of a matrix of views obtained from light-field data encoded for example according to the encoding method describe here above.

Thus, in this embodiment, the method of decoding according to the invention comprises:

- decoding (91) information representative of a type of encoding of the group of views from the data stream, the type of encoding corresponding to an epipolar plane image encoding of the group of views using at least one part of epipolar plane image, or the type of encoding corresponding to a view by view encoding of the group of views according to a views' encoding order,

- decoding (92) the group of views from the data stream responsive to the information representative of a type of encoding wherein, in the case where the type of encoding is an epipolar plane image encoding, decoding the group of views comprises :

  - decoding (921) at least one part of an epipolar plane image associated with the group of views; and
  - obtaining (922) the group of views from the at least one part of an epipolar plane image.

The decoding method decodes each group of views starting from the decoding of information $I_{T\_ENC}$ representative of a type of encoding of the group of views, and depending on the nature of the group of views five decoding embodiments can be implemented according to the present disclosure.

According to a first embodiment, the group of views corresponds to the whole matrix of views, and the information $I_{T\_ENC}$ representative of a type of encoding comprises only one element *views_enc_id* representative of a type of encoding associated with the matrix of views.

According to this first embodiment, the decoding will be performed using for example a program code instruction like a *decode_views ()* function wherein:

- *views_enc_id* = 0 indicates that a view by view encoding of the whole matrix of views has been performed according to a views' encoding order, and requires thus a view by view decoding according to the same views' decoding order, with the matrix of views decoding function *decode_matrix_views ()*,
- *views_enc_id* = 1 indicates that a vertical EPI encoding of a matrix of vertical epipolar plane images has been performed, and requires thus a vertical EPIs decoding, with the decoding function *decode_matrix_vEpi ()* which decodes first (921) the encoded matrix of vertical epipolar plane images, and then obtains (922) from the resulting decoded matrix of vertical epipolar plane images the matrix of views,
- *views_enc_id* = 2 indicates that an horizontal EPI encoding of a matrix of horizontal epipolar plane images has been performed, and requires thus an horizontal EPIs decoding with the decoding function *decode_matrix_hEpi ()*, which decodes first (921) the encoded matrix of horizontal epipolar plane images, and then obtains (922) from the resulting decoded matrix of horizontal epipolar plane images the matrix of views.

In other words, according to this first embodiment, the following program code instructions can be implemented:

| decode_views () { |
| --- |
| *views_enc_id* |
| matrix_size_u |
| matrix_size_v |
| *if(views_enc_id == 0) {* |
| *decode_matrix_views () }* |
| *else if (views_enc_id ==1) {* |
| *decode_matrix_hEpi () }* |
| *else (views_enc_id == 2) {* |
| *decode_matrix_vEpi () } }* |

When the size of the encoded group of views is smaller than the size of the whole matrix of views, four other embodiments may be implemented. These four embodiments are disclosed below.

The implementation of one of these four embodiments is performed by considering that the decoding (91) of an information representative of a type of encoding of the group of views comprises at least:

- decoding (910) at least one element (matrix_size_u, matrix_size_v, Nv) representative of a number of views of the group of views, and
- decoding (911) one element (views_enc_id) representative of a type of encoding associated with the group of views.

In this case, the presence and/or the value of the element Nv signals to the decoder that the group of views is different or not from the whole matrix of views.

Then, from both values of the element Nv representative of a number of views of the group of views on the one hand and of the element (views_enc_id) representative of a type of encoding associated with the group of views on the other hand, the decoder guesses the nature of the group of views and the corresponding decoding to implement.

For example, considering a matrix of views composed of BxD views (with B=18 and D=19), if views_enc_id=0 or views_enc_id=1, the encoded group of views corresponds to a column of views, with matrix_size_u=D=19 and matrix_size_v=B=18.

According to a second embodiment, the decoding will be performed using for example a program code instruction like a *decode_vGovws ()* function wherein:

- *views_enc_id* = 0 indicates that a view by view encoding of a whole column of views has been performed according to a views' encoding order, and requires thus a view by view decoding according to the same views' decoding order, with the column of views decoding function *decode_vGov_views* (),

- *views_enc_id* = 1 indicates that a vertical EPI encoding of a column of vertical epipolar plane images has been performed, and requires thus a vertical EPIs decoding with the decoding function *decode_vGov_hEpi* (), which decodes first (921) the encoded column of vertical epipolar plane images, and then obtains (922) from the resulting decoded column of vertical epipolar plane images the column of views.

In other words, according to this second embodiment, the following program code instructions can be implemented:

```
decode_vGovws () {
    Nv
    views_enc_id
    if(views_enc_id = = 0) {
        decode_vGov_views () }
    else if (views_enc_id = = 1) {
        decode_vGov_vEpi () } }
```

According to a third embodiment, considering a matrix of views composed of BxD views (with B=18 and D=19), if Nv=D and views_enc_id=0 or views_enc_id=1, the encoded group of views corresponds to a line of views.

According to this third embodiment, the decoding will be performed using for example a program code instruction like a *decode_hGovws ()* function wherein:

- *views_enc_id* = 2 indicates that a view by view encoding of the whole line of views has been performed according to a views' encoding order, and requires thus a view by view decoding according to the same views' decoding order, with the line of views decoding function *decode_hGov_views* ()

- *views_enc_id* = 3 indicates that an horizontal EPI encoding of a line of horizontal epipolar plane images has been performed, and requires thus an horizontal EPIs decoding with the decoding function *decode_hGov_hEpi* (), which decodes first (921) the encoded line of horizontal epipolar plane images, and then obtains (922) from the resulting decoded line of horizontal epipolar plane images the line of views,

In other words, according to this third embodiment, the following program code instructions can be implemented:

```
decode_hGovws () {
    Nv
    views_enc_id
    if(views_enc_id = = 2) {
        decode_hGov_views ()
    }
    else if (views_enc_id = = 3)
    {
        decode_hGov_hEpi ()
    }
}
```

According to a fourth and a fifth embodiments, the element *Nv* representative of a number of views of the group of views is smaller than the dimensions B, D of the matrix of views. In this case, the element *Nv* indicates to the decoder that an encoding of a group smaller than a whole column of views or than a whole line of views of the matrix of views has been performed.

As already indicated for the encoding method and as illustrated by **Figure 8**, such fourth and fifth embodiments may be mixed to encode/decode the whole matrix of views.

The decoder guesses the decoding to implement by combining the value of the element *Nv* representative of a number of views of the group of views and the value of the element *views_enc_id* and the decoding will be performed using for example a program code instruction like a *decode_hGovws ()* function wherein:

- *Nv* is the number of views in the group of views,

- *First_view_u is the horizontal coordinate of the first views of the* group of views

- *First_view_v is the vertical coordinate of the first views of the* group of views

- *views_enc_id = 0* indicates that a view by view encoding of a part of a column of views has been performed according to a views' encoding order, and requires thus a view by view decoding according to the same views' decoding order, with the part of column of views decoding function *decode_vGov_vviews* (),

- *views_enc_id* = 1 indicates that a vertical EPI encoding of a part (i.e. Q columns of pixels) of each vertical epipolar plane image of a column of vertical epipolar plane images has been performed, and requires thus a vertical EPIs decoding with the decoding function *decode_vGov_vEpi* (), which decodes first (921) the part of encoded (i.e. Q columns of pixels) of each vertical epipolar plane image of a column of vertical epipolar plane images, and then obtains (922), from the resulting decoded Q columns of pixels (i.e. Q columns of pixels) of each vertical epipolar plane image of a column of vertical epipolar plane images, the part of column of views,

- *views_enc_id* = 2 indicates that a view by view encoding of a part of a line of views has been performed according to a views' encoding order, and requires thus a view by view decoding according to the same views' decoding order, with the part of line of views decoding function *decode_hGov_hviews ()*,

- *views_enc_id* = 3 indicates that an horizontal EPI encoding of a part (i.e. K lines of pixels) of each horizontal epipolar plane image of a line of horizontal epipolar plane images has been performed, and requires thus an horizontal EPIs decoding with the decoding function *decode_hGov_hEpi* (), which decodes first (921) the part of encoded (i.e. K lines of pixels) of each horizontal epipolar plane image of a line of horizontal epipolar plane images, and then obtains (922), from the resulting decoded K lines of pixels (i.e. K lines of pixels) of each horizontal epipolar plane image of a column of vertical epipolar plane images, the part of column of views.

| decode_Govws () { |
|---|
| First_view_u |
| First_view_v |
| Nv |
| views_enc_id |
| if(views_end_id = = 0) { |
| decode_vGov_vviews () } |
| else if (views_end_id = = 1) { |
| decode_vGov_vEpi () } |
| else if (views_end_id = = 2) { |
| decode_hGov_hviews () } |
| else if (views_end_id = = 3) { |
| decode_hGov_hEpi() } } |

*5.4 Structures of the encoder and decoder*

On **Figure 5, and 9**, the modules are functional units, which may or not be in relation with distinguishable physical units. For example, these modules or some of them may be brought together in a unique component or circuit, or contribute to functionalities of a software. A contrario, some modules may potentially be composed of separate physical entities. The apparatus which are compatible with the disclosure are implemented using either pure hardware, for example using dedicated hardware such ASIC or FPGA or VLSI, respectively « Application Specific Integrated Circuit », « Field-Programmable Gate Array », « Very Large Scale Integration », or from several integrated electronic components embedded in a device or from a blend of hardware and software components.

**Figure 10** represents an exemplary architecture of a device 1000 which may be configured to implement an encoding method described in relation with **Figure 5-8** or a decoding method in relation with **Figure 9**.

Device 1000 comprises following elements that are linked together by a data and address bus 1001:

- a microprocessor 1002 (or CPU), which is, for example, a DSP (or Digital Signal Processor);
- a ROM (or Read Only Memory) 1003;
- a RAM (or Random Access Memory) 1004;
- an I/O interface 1005 for transmission and/or reception of data, from an application; and
- a battery 1006.

According to a variant, the battery 1006 is external to the device. Each of these elements of **Figure 10** are well-known by those skilled in the art and won't be disclosed further. In each of mentioned memory, the word « register » used in the specification can correspond to area of small capacity (some bits) or to very large area (e.g. a whole program or large amount of received or decoded data). ROM 1003 comprises at least a program and parameters. Algorithm of the methods according to the disclosure is stored in the ROM 1003. When switched on, the CPU 1002 uploads the program in the RAM and executes the corresponding instructions.

RAM 1004 comprises, in a register, the program executed by the CPU 1002 and uploaded after switch on of the device 1000, input data in a register, intermediate data in different states of the method in a register, and other variables used for the execution of the method in a register.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

According to a specific embodiment of encoding or encoder, the matrix of views is obtained from a source. For example, the source belongs to a set comprising:

- a local memory (1003 or 1004), e.g. a video memory or a RAM (or Random Access Memory), a flash memory, a ROM (or Read Only Memory), a hard disk ;

- a storage interface, e.g. an interface with a mass storage, a RAM, a flash memory, a ROM, an optical disc or a magnetic support;
- a communication interface (1005), e.g. a wireline interface (for example a bus interface, a wide area network interface, a local area network interface) or a wireless interface (such as a IEEE 802.11 interface or a Bluetooth® interface); and
- a picture capturing circuit (e.g. a sensor such as, for example, a CCD (or Charge-Coupled Device) or CMOS (or Complementary Metal-Oxide-Semiconductor)).

According to different embodiments of the decoding or decoder, the decoded matrix of views is sent to a destination; specifically, the destination belongs to a set comprising:

- a local memory (1003 or 1004), e.g. a video memory or a RAM (or Random Access Memory), a flash memory, a ROM (or Read Only Memory), a hard disk ;
- a storage interface, e.g. an interface with a mass storage, a RAM, a flash memory, a ROM, an optical disc or a magnetic support;
- a communication interface (1005), e.g. a wireline interface (for example a bus interface, a wide area network interface, a local area network interface) or a wireless interface (such as a IEEE 802.11 interface or a Bluetooth® interface); and
- a display.

According to different embodiments of encoding or encoder, a bitstream delivered by the encoder is sent to a destination. As an example, the bitstream is stored in a local or remote memory, e.g. a video memory (1004) or a RAM (1004), a hard disk (1003). In a variant, the bitstreams is sent to a storage interface, e.g. an interface with a mass storage, a flash memory, ROM, an optical disc or a magnetic support and/or transmitted over a communication interface (1005), e.g. an interface to a point to point link, a communication bus, a point to multipoint link or a broadcast network.

According to different embodiments of decoding or decoder, a bitstream is obtained from a source. Exemplarily, the bitstream is read from a local memory, e.g. a video memory (1004), a RAM (1004), a ROM (1003), a flash memory (1002) or a hard disk (1003). In a variant, the bitstream is received from a storage interface, e.g. an interface with a mass storage, a RAM, a ROM, a flash memory, an optical disc or a magnetic support and/or received from a communication interface (1005), e.g. an interface to a point to point link, a bus, a point to multipoint link or a broadcast network.

Implementations of the various processes and features described herein may be embodied in a variety of different equipment or applications. Examples of such equipment include an encoder, a decoder, a post-processor processing output from a decoder, a preprocessor providing input to an encoder, a video coder, a video decoder, a video codec, a web server, a set-top box, a laptop, a personal computer, a cell phone, a PDA, and any other device for processing a picture or a video or other communication devices. As should be clear, the equipment may be mobile and even installed in a mobile vehicle.

Additionally, the methods may be implemented by instructions being performed by a processor, and such instructions (and/or data values produced by an implementation) may be stored on a computer readable storage medium. A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

The instructions may form an application program tangibly embodied on a processor-readable medium.

Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A method for encoding a matrix of views (500) obtained from light-field data, wherein said method comprises for at least one group of views (50) of said matrix of views (500):

- obtaining (51) information ($I_{T\_ENC}$) representative of a type of encoding of said group of views and encoding (52) said information in a data stream, said type of encoding corresponding to an epipolar plane image encoding (535) of said group of views using at least one part of epipolar plane image, or said type of encoding corresponding to a view by view encoding (532) of said group of views according to a views' encoding order,
- encoding (53) said group of views in said data stream responsive to said information representative of a type of encoding, wherein, in the case where said type of encoding is an epipolar plane image encoding, encoding said group of views comprises :

- obtaining (534) at least one part of an epipolar plane image (EPI) associated with said group of views (50); and
- encoding (535) said at least one part of an epipolar plane image.

2. The method for encoding according to claim 1, wherein obtaining (51) information ($I_{T\_ENC}$) representative of a type of encoding of said group of views comprises a selection of said type of encoding between at least said type of encoding corresponding to an epipolar plane image encoding (535) of said group of views using at least one part of epipolar plane image, or said type of encoding corresponding to a view by view encoding (532) of said group of views according to a views' encoding order.

3. The method for encoding according to claims 1 or 2, wherein obtaining (51) information ($I_{T\_ENC}$) representative of a type of encoding of said group of views comprises:

- obtaining (511) at least one part of an epipolar plane image associated with said group of views (50),
- using a rate distortion criterion for determining an encoding of said group of views by comparing (514) at least:

o a first encoding cost associated with an epipolar plane image encoding (512) of said group of views using said at least one part of epipolar plane image and,
o a second encoding cost associated with a view by view encoding (513) of said group of views according to said views' encoding order.

4. The method for encoding according to claim 1 or claim 2, wherein said group of views corresponds (61) to the whole matrix of views (600), and said obtaining (534) of at least one part of epipolar plane image associated with said group of views corresponds to the obtaining (62) of a matrix of horizontal epipolar plane images associated with said matrix of views and/or to the obtaining (64) of a matrix of vertical epipolar plane images associated with said matrix of views.

5. The method for encoding according to any one of claims 1 to 3, wherein said group of views corresponds (65) to a whole column of views of said matrix of views, and said obtaining (511, 534) of at least one part of epipolar plane image associated with said group of views corresponds to the obtaining (66) of a column of vertical epipolar plane images associated with said column of views.

6. The method for encoding according to any one of claims 1 to 3, wherein said group of views corresponds (68) to a whole line of views of said matrix of views, and said obtaining (511, 534) of at least one part of epipolar plane image associated with said group of views corresponds to the obtaining (69) of a line of horizontal epipolar plane images associated with said line of views.

**7.** The method for encoding according to any one of claims 1 to 3, wherein, according to said views' encoding order, said group of views corresponds (71) to a set of K consecutive views of a line of views comprising D views of said matrix of views, with K an integer such that K<D, and said obtaining of at least one part of epipolar plane image associated with said group of views corresponds to the obtaining of K corresponding lines (72) of horizontal epipolar plane images associated with said line of views.

**8.** The method for encoding according to any one of claims 1 to 3, wherein, according to said views' encoding order, said group of views corresponds to a set of Q consecutive views of a column of views comprising B views of said matrix of views, with Q an integer such that Q<B, and said obtaining of at least one part of epipolar plane image associated with said group of views corresponds to the obtaining of Q corresponding columns of vertical epipolar plane images associated with said column of views.

**9.** The method for encoding according to claims 7 or 8, wherein said integer(s) K and/or Q correspond(s) to a minimum value of consecutive views or to a modulo of said minimum value.

**10.** The method for encoding according to any one of claims 7 to 9, wherein at least two distinct groups of views of said matrix of views are encoded using two different types (81, 82) of encoding.

**11.** The method for encoding according to any one of claims 1 to 10, wherein said information ($I_{T\_ENC}$) representative of a type of encoding of said group of views comprises at least two elements:

- at least one element (matrix_size_u, matrix_size_v, Nv) representative of a number of views of said group of views, and
- one element (views_enc_id) representative of a type of encoding associated with said group of views.

**12.** Signal representative of a matrix of views obtained from light-field data, wherein said signal comprises, for at least one group of views of said matrix of views, at least:

- information (110) representative of a type of encoding of said group of views, said type of encoding corresponding to an epipolar plane image encoding of said group of views using at least one part of epipolar plane image, or said type of encoding corresponding to a view by view encoding of said group of views according to a views' encoding order,
- encoding (111) information associated with said group of views.

**13.** A method for decoding a data stream representative of a matrix of views obtained from light-field data, wherein said method comprises for at least one group of views of said matrix of views:

- decoding (91) information representative of a type of encoding of said group of views from said data stream, said type of encoding corresponding to an epipolar plane image encoding of said group of views using at least one part of epipolar plane image, or said type of encoding corresponding to a view by view encoding of said group of views according to a views' encoding order,
- decoding (92) said group of views from said data stream responsive to said information representative of a type of encoding wherein, in the case where said type of encoding is an epipolar plane image encoding, decoding said group of views comprises :

- decoding (921) at least one part of an epipolar plane image associated with said group of views; and
- obtaining (922) said group of views from said at least one part of an epipolar plane image.

**14.** The method for decoding according to claim 13, wherein said decoding (91) of an information representative of a type of encoding of said group of views comprises at least:

- decoding (910) at least one element representative of a number of views of said group of views, and
- decoding (911) one element representative of a type of encoding associated with said group of views.

**15.** A device for encoding a matrix of views obtained from light-field data, wherein said device comprises a processor configured to control, for at least one group of views of said matrix of views:

- means for obtaining information representative of a type of encoding of said group of views and encoding said information in a data stream, said type of encoding corresponding to an epipolar plane image encoding of said group of views using at least one part of epipolar plane image, or said type of encoding corresponding to a view by view encoding of said group of views according to a views' encoding order,
- means for encoding said group of views in said data stream responsive to said information representative of a type of encoding, wherein, in the case where said type of encoding is an epipolar plane image encoding, encoding said group of views comprises :

- means for obtaining at least one part of an epipolar plane image (EPI) associated with said group of views; and
- means for encoding said at least one part of an epipolar plane image.

16. A device for decoding a data stream representative of a matrix of views obtained from light-field data, wherein said device comprises a processor configured to control, for at least one group of views of said matrix of views:

- means for decoding information representative of a type of encoding of said group of views from said data stream, said type of encoding corresponding to an epipolar plane image encoding of said group of views using at least one part of epipolar plane image, or said type of encoding corresponding to a view by view encoding of said group of views according to a views' encoding order,
- means for decoding said group of views from said data stream responsive to said information representative of a type of encoding wherein, in the case where said type of encoding is an epipolar plane image encoding, decoding said group of views comprises :
- means for decoding at least one part of an epipolar plane image associated with said group of views; and
- means for obtaining said group of views from said at least one part of an epipolar plane image.

11    12    13

Microlens
array

Subject

Main lens                    Photosensor

Fig. 1

14

Fig. 2

NxN pels          LxL
sensor         μ-lenses array        16

One μ-lens overlaps
NxN pixels array

15

170
LxL pels view

17
Matrix of
NxN views

Fig. 3

17
410
420
400
40
41
43
42
4000
401

Fig. 4

71
C col
D views
L lines
K views
K lines
C col
L horizontal EPIs
D lines
72
73

Fig. 7

Fig. 5

M_V

column of views

D

B

C_V

G_V_Q_L

L_V

G_V_Q_C

lines of views

pixels

1 view

pixels

C

L

pixels

600

if G_V=M_V  61

OBT_EPI = OBT_M_HEPI  62

and / or  63

OBT_EPI = OBT_M_VEPI  64

if G_V_i=C_V  65

OBT_EPI = OBT_C_VEPI  66

i = D ?  67  Y  N

i = i+1

if G_V_i=L_V  68

OBT_EPI = OBT_L_HEPI  69

i = B ?  690  Y  N

i = i+1

Fig. 6

Fig. 8

Fig. 9

Fig. 10

Fig. 11

Europäisches
Patentamt

European
Patent Office

Office européen
des brevets

# EUROPEAN SEARCH REPORT

Application Number

EP 15 30 6837

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | HATA K ET AL: "Epipolar geometry estimation and its application to image coding", IMAGE PROCESSING, 1999. ICIP 99. PROCEEDINGS. 1999 INTERNATIONAL CONFERENCE ON - KOBE, JAPAN 24-28 OCT. 1999, IEEE, PISCATAWAY, NJ, USA, vol. 2, 24 October 1999 (1999-10-24), pages 472-476, XP010368998, DOI: 10.1109/ICIP.1999.822941 ISBN: 978-0-7803-5467-8 * abstract * * Chapters 1 and 4 * | 1-16 | INV. H04N19/597 H04N19/147 H04N19/12 H04N19/179 |
| Y | MASAYUKI TANIMOTO ET AL: "Description of 3D Video Coding Technology Proposal by Nagoya University", 98. MPEG MEETING; 28-11-2011 - 2-12-2011; GENEVA; (MOTION PICTURE EXPERT GROUP OR ISO/IEC JTC1/SC29/WG11),, no. m22567, 23 November 2011 (2011-11-23), XP030051130, * abstract * * Chapters 1, 2, 6 * | 1-16 | |
| Y | GUOLEI YANG ET AL: "Fast intra mode selection for stereo video coding using epipolar constraint", VISUAL COMMUNICATIONS AND IMAGE PROCESSING (VCIP), 2011 IEEE, IEEE, 6 November 2011 (2011-11-06), pages 1-4, XP032081407, DOI: 10.1109/VCIP.2011.6116013 ISBN: 978-1-4577-1321-7 * the whole document * | 1-16 | TECHNICAL FIELDS SEARCHED (IPC) H04N |
| Y | US 2015/319456 A1 (LE FLOCH HERVÉ [FR]) 5 November 2015 (2015-11-05) * the whole document * | 1-16 | |

The present search report has been drawn up for all claims

| Place of search | Date of completion of the search | Examiner |
|---|---|---|
| Munich | 19 April 2016 | Lindgren, Johan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 30 6837

This annex lists the patent family members relating to the patent documents cited in  the above-mentioned European search report.
The members are as contained in the European Patent Office EDP file on
The European Patent Office is in no way liable for these particulars which are merely given for the purpose of information.

19-04-2016

| Patent document cited in search report | Publication date | Patent family member(s) | | Publication date |
|---|---|---|---|---|
| US 2015319456    A1 | 05-11-2015 | GB | 2525851  A | 11-11-2015 |
| | | US | 2015319456 A1 | 05-11-2015 |

For more details about this annex : see Official Journal of the European Patent Office, No. 12/82

**REFERENCES CITED IN THE DESCRIPTION**

**Patent documents cited in the description**

- US 20130222633 A

**Non-patent literature cited in the description**

- **R. NG et al.** Light field photography with a hand-held plenoptic camera. *Standford University Computer Science Technical Report CSTR,* April 2005, vol. 02 (11
- **N. SABATER et al.** Light field demultiplexing and disparity estimation. *International Conference on Complementary Problems ICCP,* 2014
- **B. GOLDLUECKE et al.** The Variational Structure of Disparity and Regularization of 4D Light Fields. *IEEE Conference on Computer Vision and Pattern Recognition,* 2013, 1003-1010
- **T. WIEGAND et al.** Lagrange multiplier selection in hybrid video coder control. *International Conference on Image Processing,* 2011, vol. 3, 542-545